# EUROPEAN PATENT APPLICATION

(11) **EP 4 349 478 A1**
(43) Date of publication of application: **10.04.2024**
(21) Application number: 22815419.1
(22) Date of filing: 02.06.2022
(51) Int. Cl.: B01J 21/06, C23C 18/16, B82Y 30/00, B82Y 40/00

(54) **PHOTOCATALYST MATERIAL AND NANOMETRIC COATING OBTAINED THEREFROM**

(30) Priority: 02.06.2021 ES 202130501
(71) Applicant: Universitat de València, 46010 Valencia (ES)
(72) Inventor: ABARGUES LÓPEZ, Rafael, 46010 València (ES); MARTÍNEZ PASTOR, Juan Pascual, 46010 València (ES)
(74) Representative: Cueto, Sénida
(86) International application number: PCT/ES2022/070341
(87) International publication number: WO 2022/254070

(57) **Abstract**

The present invention relates to a photocatalyst nanomaterial comprising a solid substrate and a metal oxide/oxyhydroxide arranged on the solid substrate forming a coating having a thickness comprised between 1 nm and 1 micrometer and having an amorphous structure. The invention also relates to a nanometric coating which comprises the described photocatalyst material and metallic nanoparticles, as well as to the method for obtaining the catalyst material, to the use of the catalyst material as a photocatalyst in the ultrafast synthesis of metallic nanoparticles, and to the use of the nanometric coating in the manufacture of optical sensors, biocidal coatings and elimination of reactive oxygen species.

## Description

### FIELD OF THE INVENTION

The present invention refers to the *in-situ* synthesis of a nanometric coating of metal oxide/oxyhydroxide, mainly titanium, in the solid state and its use as a photocatalyst in the ultrafast synthesis of metal nanoparticles embedded inside organic polymers or metal oxides by exposure to ultraviolet light.

### BACKGROUND

Nanomaterials, as metals, semiconductors, and thin-layer insulators, have innumerable uses in industrial processes and multifunctional devices with applications in catalysis, sensors, biotechnology, photovoltaics, optoelectronics, photonics, and microelectronics. Furthermore, in recent years, one of the most promising lines of research is the field of plasmonics due to the large number of technological applications. Plasmonics is based on the excitation of surface plasmons (SP) that are produced on the surface of micro- and nanoparticles of noble metals such as Au and Ag. In document WO2009109685 "Plasmonic nanocomposites based on polymer and metal nanoparticles for lithographic use", invention developed in the ICMUV research group, mention is made of a new type of material with lithographic properties formed by Au and Ag metallic nanoparticles embedded in a polymer (nanocomposite). Said document claims that these nanocomposites can be useful for the manufacture of plasmonic devices, such as those mentioned above. Documents ES2325468A1 and ES2471667A1 refer to a method for obtaining nano and micrometric metallic structures of various geometries from lithographic resins formed by metallic nanoparticles and a polymer (Novolak and/or PVA (polyvinyl alcohol)) through a growth metallic process non-electrochemical. The nanoparticles embedded inside the structured polymer serve as a seed for the metallization of the lithographic motifs. This type of material may have applications, for example, for the design of new light-guiding nanoplasmonic devices for the development of advanced technology plasmonic photodetectors and amplifiers, metallic micro and nanocontacts, as well as in plasmonics applied to photovoltaics. Other documents such as R. Abargues, P. J. Rodriguez-Canto, S. Albert, I. Suarez, J. P. Martinez-Pastor. J. Mater. Chem. C. 2014, 2, 908-915 (2014) report similar conditions. In these documents mention is made of inventions in which nanoparticles are generated inside polymers deposited on flexible, rigid and semi-rigid solid substrates. However, according to both documents it is necessary to apply a heat treatment at temperatures above 120 °C for times of at least 10 minutes. The manufacture of these materials normally requires heat treatments at high temperatures (typically between 150 and 300 °C) to carry out both the evaporation of solvents and the necessary chemical reactions. The problem with this is that it prevents the manufacture of these materials on plastic substrates such as labels and, in addition, the reaction times are relatively high, significantly limiting their possible integration into roll-to-roll industrial manufacturing processes such as flexography, in which reaction time of a few seconds is required.

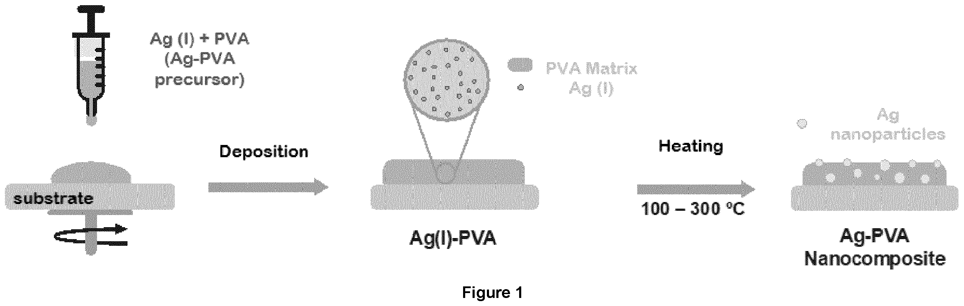

A method is known to prepare thin film nanocomposites by means of spin coating a solution of a polymer (PVA or Novolak) and a silver (AgNO₃, AgCIO4) or gold (HAu Cl₄, KAuCL) salt ( Rafael Abargues, Kamal Abderrafi, E. Pedrueza, Rachid Gradess, J. Marqués-Hueso, José Luis Valdés and Juan Martinez-Pastor New J. Chem., 2009, 33, 1720-1725). A possible synthetic route for the *in-situ* generation of nanoparticles (NPs) that are formed during the thermal curing process (between 100-240°C) of the polymeric film obtained by deposition of the solution, so that during curing the reduction to Ag(0) and Au(0) of the metal ions of Ag(I) and Au(III) present inside the polymeric film occurs (figure 1). Curing times of around several minutes between 5 and 30 min are typically used.

However, this manufacturing process cannot be carried out in the case of using thermolabile substrates or surfaces, for example, plastic substrates made of PE (polyethylene), PP (polypropylene), PC (polycarbonate), PET (polyethylene terephthalate), PEN (polyethylene naphthalate), PMMA (polymethyl methacrylate), PS (polystyrene), PLA (polylactic acid), PU (polyurethane) or natural polymers such as cellulose (paper, wood), silk, wool, cotton, starch, proteins, natural rubber and wood. In other words, to allow the application of this type of nanomaterials on substrates, the formation of silver nanoparticles cannot be carried out by heat treatment, since some materials, such as plastic, cannot withstand these temperatures and degrade.

Document EP1997860 discloses a photocatalyst for use as an antimicrobial, consisting of a uniformly dispersed coating liquid, comprising a composition containing titanium oxide particles dispersed in an aqueous solvent, with an average primary particle diameter of 5 to 50 nm and an average dispersed particle diameter of 10 to 100 nm; a polymeric dispersing agent; a polycondensation product of alkoxysilane hydrolysis; and an organic amine, such that the coating liquid has a pH value in the range of 5 to 9, such that the titanium oxide particles contain silver particles. According to this document, TiOz is already synthesized before being deposited, forming a colloidal solution of TiOz NPs, unlike what occurs according to the present invention, in which TiOz is only formed once the precursor is deposited on the substrate, not in solution. In the present invention the photocatalyst is arranged on a solid substrate.

US2015071980A1 discloses a method for forming metal nanoparticles comprising: depositing metal ions on a carrier consisting of sodium titanate or a sodium titanium oxide nanotube, the metal ions having a known oxidation state; after deposition the metal ions and the titanate carrier are exposed to a reducing agent, such as UV light, such that nanoparticles of the metal are formed on the titanate carrier, reducing the metal in the nanoparticles. According to this document, a catalyst in the form of a layer deposited on a solid substrate is not obtained.

Document EP2333024A1 refers to a method of forming an electrically conductive thin film, using UV radiation or a thermal agent (40-100°C) as a curing agent. The coating is applied using the spin-coating technique and contains titanium oxide and silver nanoparticles.

Document KR101019747B1 discloses the manufacture of a thin film of gold nanoparticles and titanium dioxide, by spin coating on a substrate, followed by the application of ultraviolet light radiation.

Document US2016333482A1 describes the manufacture of a coating applied in flexo or spin coating to a PET-type plastic substrate. The coating presents titanium dioxide, with silver ions that are reduced by applying ultraviolet radiation to the coating.

SHI, Z., et al., Preparation of TiO2 nanoparticles coated cotton fibers at low temperature and their photocatalytic activity, The Chinese Journal of Process Engineering, Vol.10, No.4, 2010, 809-814, discloses material made of cotton covered with titanium oxide nanoparticles that adhere to the surface by boiling in water for 30 min. The substrate is therefore a solid substrate. However, the TiOz particles remain attached to the cotton substrate without forming a continuous coating, but rather an aggregate of particles.

In this document, Figure 1B shows the material obtained, in which nanoparticles cannot be distinguished. The process described in the document SHI, Z., et al., requires heating at 100°C in water to impregnate the tissue with the TiOz NPs. In the present invention, the photocatalytic material is deposited in the form of a wet film without the need to apply heat treatment to obtain maximum thicknesses of 1 µm. These small thicknesses represent an advantage over the state of the art, because the thicker the wet film is, the more difficult it is to dry and complicates the process and increases the time. A slower drying process gives rise to films that can crack, and this would result in not being able to obtain a continuous film, instead obtaining a texture of a granulate material or a granulate surface.

To overcome the limitations of the state of the art, especially when working with substrates that do not withstand high temperatures such as organic polymers (for example, PE, PP, PET, PEN, PC, PMMA, PS), paper (cellulose), the present invention uses ultraviolet (UV) radiation instead of heat for the formation of the nanoparticles, for example, inside a matrix, which can be an organic polymer (such as PVA, PE!, PVP, PEOx, PEDOT/PPS, PU , PMMA, PS, PDMS or their copolymers) or a metal oxide e.g. oxides of Li, Na, K, Rb, Cs, Mg, Ca, Sr, Ba, Ti, Cr, Mn, Fe, Co, Ni, Cu , Zn, Y, Zr, Nb, Mo, Ru, Pd, Cd, In, Sn, Sb, W, Re, Os, Ir, Pt, Pb, Ce.

### DESCRIPTION

In the present specification the expression "oxide/oxyhydroxide" refers to a product comprising oxide of the corresponding metal, or an oxyhydroxide of the corresponding metal, or a mixture of oxide and oxyhydroxide. Furthermore, in this specification the expression "metal oxide/oxyhydroxide" refers to an oxide or an oxyhydroxide of the same metal, or of a combination of metals.

The object of the present invention is, firstly, a photocatalyst nanomaterial comprising:
- a solid substrate and
   - a metal oxide/oxyhydroxide arranged on the solid substrate forming a continuous coating, with a thickness between 1 nm and 1 micrometer and with an amorphous structure.

The term "coating" when referring to the photocatalyst nanomaterial should be understood as a synonym for "layer".

The term "continuous" as applied to the present invention means that the coating forms an uninterrupted sheet or film on the substrate, i.e. no different textures or individual particles are discernible in the coating.

According to SHI, Z., et al. mentioned above, an "aggregate of nanoparticles" is obtained, which means that they have a grain boundary between them and therefore it is a material that is not continuous, since there is interparticle space. Furthermore, the article by SHI Z. et al. indicates that they are aggregates of nanoparticles on the fibers, which implies that there is a surface of the fibers that is not coated, therefore, the coating is not continuous.

Unlike what occurs according to SHI, Z., et al, in the present invention a continuous film is obtained, which means that it is composed of a compact material wherein there are no grain boundaries.

The advantages of the fact that the photocatalyst nanomaterial of the invention is a compact and continuous layer is that it interacts directly with the substrate, improving its adhesion properties without the need to apply heat to improve its adhesion by drying.

The resulting photocatalytic nanomaterial is not subjected to any thermal curing.

The fact that it is not necessary to apply drying by thermal curing (which typically takes several minutes) allows the deposition of a second layer on the photocatalytic nanomaterial of the invention by means of continuous deposition processes. This facilitates the photocatalytic synthesis of metal nanoparticles in the second layer, within the matrix, in a homogeneous and very effective way by means of UV curing in shorter times, giving rise to the nanometric coating of the invention, and without applying heat, which is decisive, since the heat that can affect and damage labile substrates on which it is deposited, especially plastic and fabric substrates.

According to particular embodiments, the photocatalytic metal oxide/oxyhydroxide is selected from Ti, Zn, Ni, Co, Al, Sb, B, Ce, Si, Ge, Zr, Y, V, Ta, Nb, Nd, W, Zr oxides/oxyhydroxides and combinations thereof. These metal oxides/oxyhydroxides have in common that their precursors are metal alkoxides, or an organometallic compound, which react (hydrolyze) rapidly with water or ambient humidity to produce metal oxides/oxyhydroxides.

According to particular embodiments, the solid substrate is in the form of a sheet.

The substrate can be any solid surface, both rigid and flexible or elastic. By way of example, it can be a natural polymer such as paper, cellulose, nanocellulose, wood, silk, wool, cotton, starch, proteins, natural rubber; it can also be ceramic materials; plastic; metal, glass; glass-ITO; stone; quartz; silicon; composites; metal oxides; among others. According to particular embodiments, the solid substrate can be selected from a plastic polymer (plastic substrates of PE (polyethylene), PP (polypropylene), PC (polycarbonate), PET (polyethylene terephthalate), PEN (polyethylene naphthalate), PMMA (polymethyl methacrylate) , PS (polystyrene), PLA (polylactic acid), PDMS (polydimethylsiloxane), PU (polyurethane) and their copolymers.

According to particular embodiments, the photocatalyst metal oxide/oxyhydroxide is selected from Ti, Zn, Ni, Co, Al, Sb, B, Ce, Si, Ge, Zr, Y, V, Ta, Nb, Nd, W, Zr oxides/oxyhydroxides and combinations thereof, and the substrate is selected from paper, cellulose, nanocellulose, wood, silk, wool, cotton, starch, proteins, natural rubber; ceramic materials; plastic; metal, glass; glass-ITO; stone; quartz; silicon; composites and oxides.

In the photocatalyst nanomaterial of the invention, the metal oxide/metal oxyhydroxide layer has a thickness between 1 nm and 1 micrometer, preferably between 1 nm and 700 nm, more preferably between 10 and 500 nm, even more preferably between 20 and 20 nm. 200 nm. According to a more preferred embodiment, the thickness is 150 nm.

A second object of the present invention is a nanometric coating comprising:
- the photocatalyst material defined above and
- metallic nanoparticles.

The nanoparticles of the nanometric coating are metal nanoparticles from a metal salt used in the preparation thereof. These metallic nanoparticles referred to here do not, therefore, come from the photocatalyst nanomaterial.

According to particular embodiments, the NPs are selected from Ag, Au, Cu, Co, Pt, Pd, Ir, Ru NPs, or a combination thereof.

According to particular embodiments, the metallic nanoparticles of the nanometric coating are embedded in the photocatalyst material and also on its surface.

According to additional particular embodiments, the nanometric coating comprises:
- the previously defined photocatalyst material and
- an additional layer that is a matrix, selected from among:
- an organic polymer and
- a metal oxide/oxyhydroxide
arranged on the photocatalyst material, in which the metal nanoparticles are embedded.

The organic polymer can be, among others, PE (polyethylene), PS (polystyrene), or their copolymers.

According to particular embodiments, in the nanometric coating, the organic polymer is selected from among: polyvinyl alcohol (PVA), poly(vinyl alcohol-co-ethylene) (EVOH), poly(vinyl butyral-co-vinyl alcohol-co-vinyl alcohol, poly(vinyl butyral-co-vinyl alcohol-co-vinyl acetate), poly(vinyl-co-vinyl acetate-co-vinyl alcohol) chloride, polyvinyl alcohol- polyethylene glycol graft copolymer, polyvinyl acetate (PVAc), polyvinylpyrrolidone (PVP), poly(1-vinylpyrrolidone-co-styrene) , poly(1-vinylpyrrolidone)-graft (1-triacontene), poly(1-vinylpyrrolidone-co-vinyl acetate), polyethylene dioxythiophene/polystyrene sulfonate (PEDOT/PSS), poly(2-ethyl-2-oxazoline) (PEOX), poly(2-methyl-2-oxazoline) (PMOX), poly¡(2-propyl-2-oxazoline) (PPOX), polydimethylsiloxanes (PDMS), polyurethanes (PU), polystyrene, polyacrylamide (PAM), poly(N-isopropyl-acrylamide) (PNIPAM), poly(N-isopropylacrylamide-co-methacrylic acid), polyethylene glycol (PEG), polyethylene-poly(ethylene glycol) block copolymer, polystyrene-poly(ethylene glycol) block copolymer), poly(methyl vinyl ether), poly(methyl vinyl-co-maleic anhydride), poly(methyl methacrylate) (PMMA), poly(lauryl methacrylate) (PLMA), poly(butyl methacrylate) (PBMA), poly(methyl methacrylate -co- methacrylic acid, poly(methyl methacrylate -co-ethyl acrylate), poly(methyl 20 methacrylate -co-butyl methacrylate), poly(methyl methacrylate -co-ethylene dimethacrylate), poly(α-methylstyrene), poly(benzyl methacrylate), poly(tert-butyl methacrylate), poly(cyclohexyl methacrylate), poly(ethyl methacrylate), poly(hexadecyl methacrylate), poly(hexyl methacrylate), poly(isobutyl methacrylate), poly(tetrahydrofurfuryl methacrylate), poly(tetrahydrofurfuryl methacrylate-co-ethyl methacrylate), poly(acrylonitrile-co-methyl acrylate), poly(N-isopropylacrylamide-co-co-methacrylic acid), polyacrylonitrile, polycarbonate ( PC), poly(styrene-co-acrylonitrile), poly(styrene-co-allyl alcohol), poly(styrene-co-chloromethylstyrene), poly(styrene-co-4-chloromethylstyrene-co-4-methoxymethylstyrene), poly( styrene-co-maleic acid), poly(styrene-co- α - methylstyrene), poly(acenaphthylene), poly(4-bromostyrene), poly(4-chlorostyrene), poly(4-tert-butyl styrene), poly(4-vinylbiphenyl), poly(vinylcyclohexane), poly(4-vinylphenol), poly(vinyltoluene-co- α -methylstyrene), poly(styrene-co-acrylonitrile) (PS-co-AN), 5 poly(styrene-co-allyl alcohol) (PS-co-AA), poly(styrene-co-methyl methacrylate) (PS-co-MMA), polyacrylamide (PAM), poly(4-vinylphenol-co-methyl methacrylate) methyl) (P4VP-co-MMA), polyethyleneimine and poly(vinyl cinnamate).

According to particular embodiments, the metal oxide/oxyhydroxide can be made of Li, Na, K, Rb, Cs, Mg, Ca, Sr, Ba, Ti, V, Cr, Mn, Fe, Co, Ni, Cu, Zn, Al, Ga, Si, Ge, Y, Zr, Nb, Mo, Ru, Pd, Cd, In, Sn, Sb, W, Re, Os, Ir, Pt, Pb, Hf, La, Ce, Pr, Tb, Se, Ta, Eu or Gd. Preferably, it is selected from Ti, Ni, Zn, Co, Sn, In, Mo, Ce, Mg, Mn, Ti and Pd.

The metal oxide/oxyhydroxide precursor salt can be metal carboxylates (acetates, formates, oxalates, citrates, phthalates, acetylacetonates), nitrates, sulfates and chlorides, preferably metal carboxylates (acetates, formates, oxalates, citrates, phthalates, acetylacetonates), preferably acetates, formates, acetylacetonates, nitrates, sulfates and chlorides and more preferably the acetate and formate of the corresponding metal.

According to particular embodiments, in the nanometric coating:
- the photocatalyst material forms a layer with a thickness between 1 nm and 1 micrometer, preferably between 1 nm and 700 nm, more preferably between 10 and 500 nm, even more preferably between 20 nm and 200 nm, and especially preferably between 40 nm and 150 nm.
- the matrix in which the metal nanoparticles are embedded forms a layer with a thickness between 10 nm and 1 micrometer.

The present invention further relates to a method for the *in situ* preparation of the metal oxide/oxyhydroxide photocatalyst nanomaterial defined above comprising the following steps:
I. dissolving a metal oxide/oxyhydroxide precursor in a solvent,
II. coating of the substrate with the liquid medium of step (I) obtaining the photocatalyst material in the form of a wet film.

The substrate can be selected from any of those mentioned above.

The step of coating the substrate with the liquid medium of step (I) can be carried out using standard deposition techniques such as spin-coating, dip-coating, spray coating or by printing techniques such as flexography, screen printing, gravure, slot-die coating or digital printing inkjet and plotter type.

In step I) the solvent is an organic solvent, such as alcohols (such as ethanol, methanol, isopropanol, butanol among others), glycol ethers (such as 2-methoxyethanol, 2-ethoxyethanol, 2-butoxyethanol, 2-phenoxyethanol, 1-methoxy-2-propanol among others), glycol esters (such as 1-methoxy-2-propanol acetate, 2-ethoxyethyl acetate), esters (such as methyl acetate, ethyl acetate, among others), carbonic esters (such as diethylcarbonate, dipropylcarbonate, among others), amide solvents (such as N,N-dimethylformamide (DMF), N,N-dimethylacetamide (DMAc), N-methylpyrrolidone (NMP), N-vinylpyrrolidone (NVP), sulfoxides (such as dimethyl sulfoxide (DMSO)), toluene, chlorobenzene, chloroform, dichloromethane, cyclohexanone, gamma butyrolactone.

According to particular embodiments, in step I) the metal oxide/oxyhydroxide precursor is a metal alkoxide or an organometallic compound, since they are easily hydrolyzed with water and environmental humidity to form the corresponding metal oxides/oxyhydroxides. As titanium oxide/oxyhydroxide precursors preferably titanium (IV) alkoxides are used (e.g. titanium tetraisopropoxide, titanium butoxide, titanium tertbutoxide, titanium(IV) ethoxide, titanium(IV) ethylhexoxide), bis(2,4-pentanedionate) oxide, titanium(IV) (diisopropoxide)bis(2,4-pentanedionate), titanium(IV) methoxide, tetrakis(diethylamino)titanium(IV). As Zn oxide/oxyhydroxide precursor, preference is given to using zinc isopropoxide, or Zn acetate or dimethyl zinc. Other metal oxide/oxyhydroxide precursors are: nickel isopropoxide, barium isopropoxide, antimony(III) isopropoxide, aluminum isopropoxide, cobalt isopropoxide, cerium(IV) isopropoxide, copper(II) ethoxide, europium isopropoxide, gadolinium isopropoxide gallium isopropoxide, tetraethoxysilane, germanium isopropoxide, tetraethylgermanium, germanium N-butoxide, germanium(IV) ethoxide, hafnium isopropoxide, hafnium tert-butoxide, indium isopropoxide, iron(III) isopropoxide, isopropoxide lanthanum, lithium tert-butoxide, magnesium tert-butoxide, manganese(II,III) isopropoxide, molybdenum (V) isopropoxide, niobium isopropoxide, scandium isopropoxide, praseodymium isopropoxide, strontium isopropoxide, tantalum isopropoxide , tin(IV) isopropoxide, tin(IV) tert-butoxide, tungsten(VI) isopropoxide, terbium isopropoxide, yttrium isopropoxide, zirconium isopropoxide, zirconium tert-butoxide, vanadium( V) triisopropoxide, vanadium (V) oxytriethoxide.

In step I) the metal oxide/oxyhydroxide precursor is preferably a metal alkoxide.

The concentration of the metal oxide/oxyhydroxide precursor solution used is related to the thickness of the layer of photocatalyst material. A decrease of the concentration of the precursor solution decreases the absorbance of the film obtained because fewer nanoparticles are formed.

The concentration of the metal oxide/oxyhydroxide precursor solution may be between 0.01M and 1M, preferably between 0.05 and 0.75M, and more preferably between 0.1 and 0.4M.

Alkoxides in general, and those of titanium in particular, are quite reactive and exposed to environmental humidity they hydrolyze and condense and the transition from liquid solution to the formation of a gel (white color) occurs, making the precursor solution useless. For this reason, optionally, when they are used, a stabilizer can be added to make the precursor less reactive towards the environment and, thus, the solution lasts longer. For example, alcohol amines such as monoethanol amine (MEA), diethanol amines (DEA) or triethanolamine (TEA) can be used, which complex the metal, for example Ti(IV), stabilizing it against environmental humidity. Whether or not to use the stabilizer depends on the reactivity of the alkoxides. In the case of TiO₂, its use is essential.

The concentration of stabilizer, such as monoethanolamine (MEA), diethanolamine (DEA), triethanolamine (TEA), that is added to the precursor can affect the catalytic capacity of the resulting photocatalyst (for example TiOxOH), but there is no significant change in the absorbance intensity measured to verify this effect, with the concentration, with respect to the precursor, therefore, the catalytic activity is hardly affected. Catalytic activity is affected by the stability of the precursor solution, and therefore a higher concentration of a stabilizer, such as TEA, is possible to provide stability without decreasing catalytic activity.

The concentration of the stabilizer solution (e.g. MEA, DEA, TEA) may be between 0.01 M and 1M, preferably between 0.05 and 0.75 M, and more preferably between 0.1 and 0.4 M.

According to particular embodiments, using titanium (IV) butoxide as an oxide/oxyhydroxide precursor, the useful life of the solution can be extended with respect to the use of TTiP as a precursor.

The object of the present invention is also a method of *in-situ* synthesis of the nanometric coating of metal oxide/oxyhydroxide in the solid state.

The method for the *in situ* preparation of the nanometric coating comprises the following steps:
I) dissolving a metal oxide/oxyhydroxide precursor in a solvent,
II) coating a substrate with the solution from step (I) for the formation of the photocatalyst material in the form of a wet catalytic film,
III) a step III) selected from:
   IIIa) solution of a metallic salt and
      - an organic polymer
      - or a metal oxide/oxyhydroxide precursor
      in a second solvent and
   IIIb) direct deposition of the metal salt on the film of catalyst material, and
V) UV curing at room temperature between 0.1 and 240 seconds, obtaining metal nanoparticles from the metal salt used in step III).

The method for the preparation of the nanometric coating comprises the steps for obtaining the photocatalyst material defined above (steps I and II), followed by steps III and V defined in the previous paragraph.

In the event that the method comprises option IIIa) in the third step, nanoparticles embedded in the polymer or the oxide/oxyhydroxide are obtained.

In step II) the metal oxide/oxyhydroxide precursor solution is deposited on the substrate.

According to particular embodiments, the process comprises:
I) dissolving a metal oxide/oxyhydroxide precursor in a solvent,
II) coating a substrate with the solution from step (I) for the formation of the photocatalyst material in the form of a wet catalytic film,
IIIa) dissolving a metallic salt and
   - an organic polymer
   - or a metal oxide/oxyhydroxide precursor in a second solvent
IV) coating of the substrate obtained in step II) with the solution of step IIIa) for the formation of a wet film of the nanometric coating, and
V) curing by UV at room temperature, between 0.1 and 240 seconds, obtaining metal nanoparticles of the metal salt used in step III).

In the event that the method comprises option IIIb) in the third step, it is not necessary to use a polymer or a metal oxide/oxyhydroxide to generate the NPs. In this case, the nanometric coating comprises the previously defined photocatalyst material and NPs from the direct deposition of the metal salt.

When the coating is obtained by direct deposition of the metal salt (step IIIb)) on the layer of photocatalytic material, the NPs are embedded in the photocatalyst layer (such as TiO₂), that is, inside the metal oxide/oxyhydroxide and also on its surface.

Steps I) and II) correspond to obtaining the photocatalyst material, as explained above, and all the particular embodiments for these steps are applicable in the same way to obtaining the nanometric coating.

According to an additional particular embodiment, in step III), both IIIa) and IIIb), the metal salt is a salt selected, for example, from a salt of Ag (such as silver nitrate, silver perchlorate), Au (HAuCl₄, NaAuCl₄), Cu (Cu acetate), Co (CoCl₂, Co acetate), Pt (H₂PtCl₆, H₂PtCl₄), Pd (Pd acetate), Ir (IrCl₃ ×H₂O), Ru (RuCl₃ ×H₂O), or a combination of these salts.

The concentration of the metal salt in the solution of step IIIa) (metal salt solution + organic polymer, or metal salt solution + metal oxide/oxyhydroxide precursor) can vary between 10⁻³ and 1 M, preferably between 0.01 and 0.5 M.

In any case, the amount of metallic nanoparticles that are formed is directly proportional to the concentration of metallic salt used and, consequently, the intensity of color (absorbance) that the resulting coating presents, is also directly proportional to the concentration of metallic salt used.

According to an additional particular embodiment, in step IIIa), the organic polymer is selected from among the organic polymers mentioned above, in at least one second solvent, which is an organic solvent or water.

The concentration of the organic polymer solution in step IIIa) can be between 0.01 and 30% w/w, preferably between 0.1 and 10% w/w, and more preferably, between 0.5 and 5% w /w with respect to the weight of the solution.

The concentration of organic polymer in the solution is related to the thickness of the nanometric coating. A decrease in the concentration of the metal oxide/oxyhydroxide precursor solution decreases the absorbance of the obtained nanocoating film because fewer nanoparticles are formed.

The concentration of the metal oxide/oxyhydroxide precursor solution in step IIIa may be between 0.01 M and 1 M, preferably between 0.05 and 0.75 M, and more preferably between 0.1 and 0.4 M.

According to an additional particular embodiment, in step IIIa), the metal oxide precursor is selected from metal salts, preferably acetates, of Li, Na, K, Rb, Cs, Mg, Ca, Sr, Ba, Ti, V, Cr, Mn, Fe, Co, Ni, Cu, Zn, Al, Ga, Si, Ge, Y, Zr, Nb, Mo, Ru, Pd, Cd, In, Sn, Sb, W, Re, Os, Ir, Pt, Pb, Hf, La, Ce, Pr, Tb, Se, Ta, Eu, Gd. Preferably, it is selected from Ni, Zn, Co, Sn, In, Mo, Ce, Mg, Mn and Pd.

According to an additional particular embodiment, in step IIIa), the second solvent is selected from among water, alcohols (such as ethanol, methanol, isopropanol, butanol, among others), glycol ethers (such as 2-methoxyethanol, 2-ethoxyethanol, 2-butoxyethanol, 2-phenoxyethanol, 1-methoxy-2-propanol among others), glycol esters (such as 1-methoxy-2-propanol acetate, 2-ethoxyethyl acetate), esters (such as methyl acetate, ethyl acetate, among others), carbonic esters (such as diethylcarbonate, dipropylcarbonate, among others), amide solvents (such as N,N-dimethylformamide (DMF), N,N-dimethylacetamide (DMAc), N-methylpyrrolidone (NMP), N-vinylpyrrolidone (NVP), sulfoxides (such as dimethyl sulfoxide (DMSO)), toluene, chlorobenzene, chloroform, dichloromethane, cyclohexanone, gamma butyrolactone.

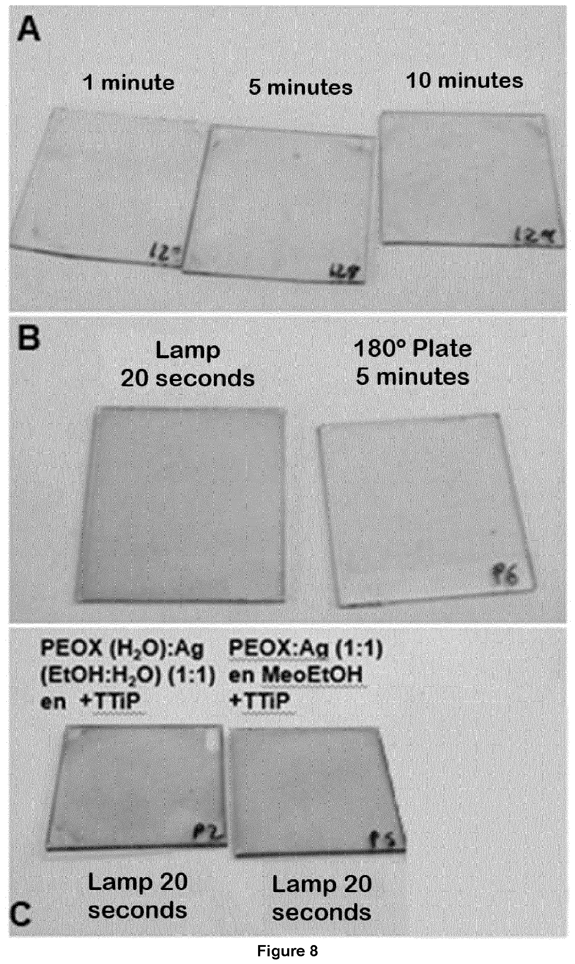

Optionally, in step IIIa, mixtures of solvents can be used to modify the rheological properties of the solution and improve the deposition and homogeneity of the layer to be deposited. According to particular embodiments, the organic polymer is PEOX, and more particularly, used with methoxyethanol instead of water. In the case of obtaining silver nanoparticles, the use of methoxyethanol can further improve the deposition of the layers. Figure 8-C shows the improvement in the deposition of an Ag-PEOX layer with the use of methoxyethanol.

According to a particular embodiment for obtaining Ag nanoparticles, and using PVA, when the concentration of PVA in the solution is decreased, from 4% to 1% w/w, with respect to the total weight of the solution, the thickness of the Ag-PVA layer obtained decreases from 200 to 80 nm respectively. For this same embodiment, the catalysis is more effective the smaller the thickness of the Ag-PVA layer, this is expected since the smaller the thickness, the more the Ag(I) is in contact with the photocatalyst. The layer with a smaller thickness presents a higher reaction speed. While with PVA at 4% w/p (200 nm) after 5 seconds less than 40% of the reaction has been produced, with PVA 1% w/p (80 nm) at 6 seconds more than 80 % of the reaction has been produced.

According to particular embodiments, the concentration of the precursor inorganic salt of the metal nanoparticles can also be modified by varying the ratio between the salt and the organic polymer in the reaction mixture. According to a particular embodiment, AgNO₃ as Ag precursor, and PVA in a mixture of a 1:8 Ag:PVA by weight ratio are used.

The solutions of steps I) and III) can be deposited by various conventional deposition and printing techniques on different types of plastic substrates: flexible, elastic, rigid and semi-rigid, such as those mentioned above, because the reaction is carried out at environmental temperature and conditions.

According to an additional particular embodiment, in step II), the coating of the substrate with the solution from step (I) is carried out using spin-coating, dip-coating, spray coating or printing techniques such as flexography, screen printing, rotogravure, slot-die coating or digital printing as inkjet and plotter printing.

According to particular embodiments, the rotation speed in the spin coating deposition step can vary, for example, between 1000 rpm and 5000 rpm.

The coating that is carried out in step IV) can be done by means of spin-coating, dip-coating, spray coating deposition techniques or by printing techniques such as flexography, serigraphy, gravure, slot-die coating or digital printing as inkjet and plotter printing.

When the deposition or coating of step II) is carried out by spin coating, the thickness of the metal oxide/oxyhydroxide catalytic layer varies according to the precursor concentration and the rotation speed used. In general, the higher the concentration of precursor and the lower the rotation speed, the greater thickness of said photocatalytic layer is obtained.

According to particular embodiments, the thickness of the Ag-PVA nanometric coating layer is between 10 nm and 50 µm, preferably between 50 and 500 nm, more preferably between 80 and 200 nm.

According to an additional particular embodiment, to change the thickness of any of the two layers (that of the catalytic metal oxide/oxyhydroxide precursor and the nanometric coating layer (for example, an Ag-PVA nanocomposite), the simplest thing is to change the rotation speed of the spin coating or the concentration of the precursor solution In general, the higher the precursor concentration and the lower the rotation speed, the greater the thickness of any of the layers obtained, up to a certain limit (which is approximately 10 µm). This is the case, for example, in the case of the TiOz precursor layer.

The term nanocomposite refers to a product that is obtained when a material composed of a nanomaterial (Ag NPs, e.g.) embedded inside a matrix (a polymer or a metal oxyhydroxide) is generated. That is, the nanocomposite can be formed by a combination of organic and inorganic substances, or also by purely inorganic substances with distinct crystalline phases, as for example in the case of Ag NPs embedded in metal oxide/oxyhydroxide.

Curing with UV radiation can be combined with one of: thermal curing between 20 and 500 °C, infrared curing or microwave curing.

UV curing at room temperature between 0.1 and 240 seconds, preferably between 0.1 and 180 seconds results, in the event that the process comprises step IIIb), the reduction of the metal salts to their corresponding nanoparticles.

According to an additional particular embodiment, in step V), the UV curing is carried out at room temperature between 0.1 and 180 seconds.

During the UV curing process of step V) the synthesis of metal NPs occurs inside a matrix, or on the catalytic metal oxide/oxyhydroxide (MO₁₋ₓ(OH)ₓ) layer.

UV light exposure times can be as low as a second with excellent reaction yields and outstanding adhesion properties. The speed at which the reaction with UV light occurs, allows these nanomaterials to be fabricated with large-scale printing techniques such as flexography at ultra-high printing speeds of up to 3.5 m/s (220 m/min).

The speed of the reaction in step V) depends on the power of the UV lamp used. According to particular embodiments, with a power of 250 W after 3 seconds, about 70% of the reaction may have occurred, while for a lamp power of 75 W only about 15% of the reaction has been completed.

Another object of the invention is the use of the metal oxide/oxyhydroxide material as a photocatalyst in the ultrafast synthesis of metal nanoparticles by exposure to ultraviolet light inside the metal oxide/oxyhydroxide, or embedded inside organic polymers and metal oxides. The reaction is extremely fast, which allows these nanomaterials to be manufactured with large-scale printing techniques such as flexography at ultra-high printing speeds of up to 3.5 m/s (220 m/min).

These nanomaterials can be metallic nanoparticles embedded in the catalytic metal oxide/oxyhydroxide itself or embedded in organic polymers or inorganic matrices of metal oxides to form nanocomposites of said nanoparticles always in the form of a thin film.

An additional aspect of the invention refers to the use of the previously defined nanometric coating in the manufacture of optical sensors, biocidal coatings and reactive oxygen species scavenger.

The photocatalytic material of the invention is generated from the formulation of a metal oxide/oxyhydroxide precursor solution and the deposit of said precursor solution in the form of a thin layer on a substrate. As a result, an amorphous layer of metal oxide/oxyhydroxide is obtained, capable of efficiently absorbing UV light and photocatalyzing chemical synthesis reactions in the solid state, significantly reducing reaction times (up to seconds, even less than 3 seconds) for the formation of the metal nanoparticles inside organic polymer matrices or inside metal oxides located on the photocatalytic material, thus obtaining the nanometric coating of the invention.

An advantage of the present invention is that metal oxide/hydroxide catalysts, in particular titanium TiO₂, make it possible to obtain nanomaterials, such as metal nanoparticles and their nanocomposites inside organic polymers or metal oxides, with the use of UV light. instead of heat treatment with significantly shorter reaction times (this makes it compatible with printing techniques or high volume production).

Ultraviolet light curing has many advantages over thermal curing, such as the rapidity of the reaction, the possibility of carrying out the reaction at environmental temperature. In addition, they can easily be combined with thermal curing simultaneously if necessary.

### DESCRIPTION OF THE FIGURES

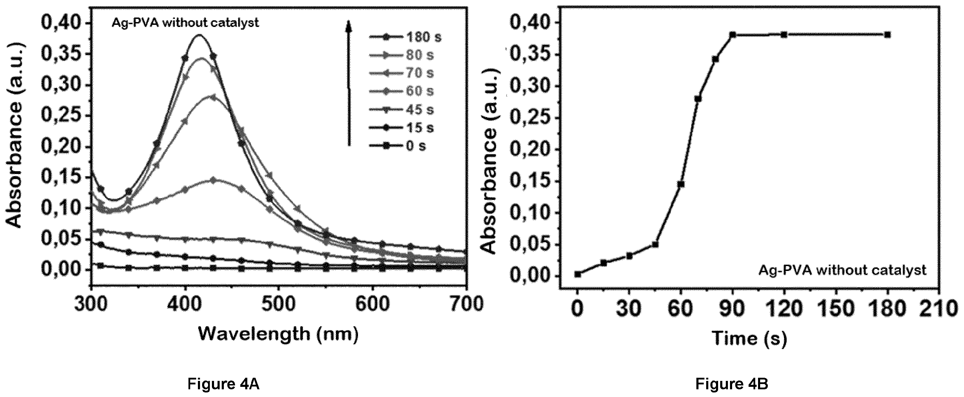

**Figure 1****.** Formation of the nanocomposite by heat treatment. Procedure belonging to the state of the art.

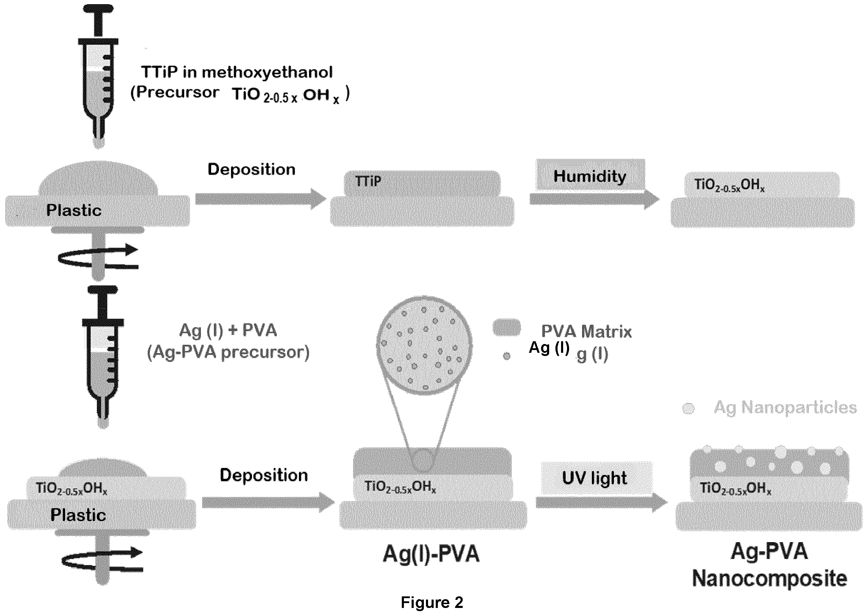

**Figure 2****.** Formation of the nanometric coating (for example, a nanocomposite) by UV curing. Process of the invention.

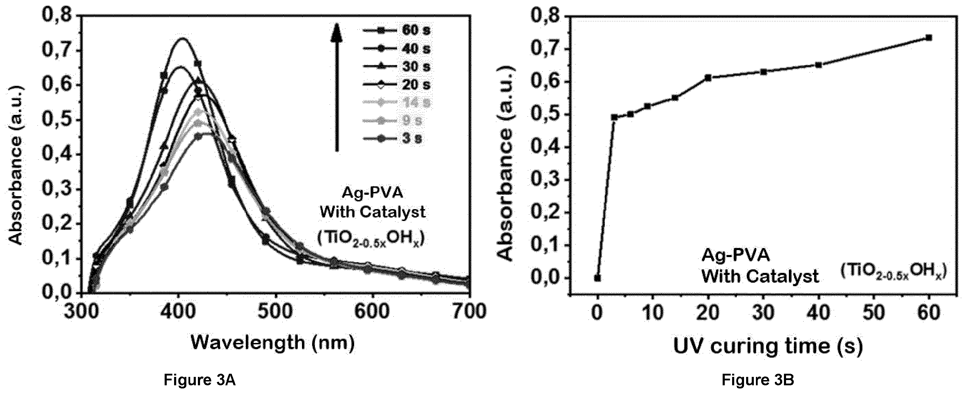

**Figure 3****.** A. Absorbance of Ag-PVA films in the formation of Ag nanoparticles, with the use of TiOz catalyst by exposure to UV light with a 250 W lamp, over a wide range of times. B. Plot of maximum absorbance versus time to monitor the reaction.
   It can be seen in figures 3A and 3B that after 3 seconds the reaction has started and has reached more than 70% of the total intensity. After 25 seconds the reaction has finished.
**Figure 4****.** A. Absorbance of Ag-PVA films in the formation of Ag nanoparticles, without the use of TiOz catalyst by thermal curing at 180°C in a wide range of times. B. Plot of maximum absorbance versus time to monitor the reaction.
   It can be seen in figures 4a and 4B that after 30 seconds the reaction has started to take place, while after 120 seconds the measured absorbance maximum remains approximately constant, which means that the reaction has already finished or is almost complete. Therefore, the formation of silver nanoparticles takes place after 30 seconds and mainly between 60 and 120 seconds of heating.

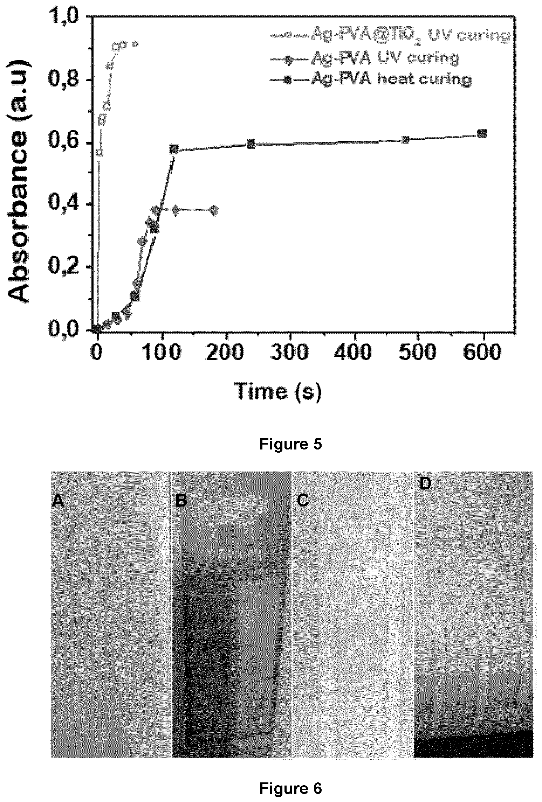

**Figure 5****:** Absorbance plots of different Ag nanocomposites synthesized with and without TiOz precursor layer by: (A) plate heating at 160°C and (B) UV light curing with a 250 W lamp.
   It is observed that the films that contain the TiOz precursor layer have an absorbance intensity between three and five times higher, depending on whether it is by UV curing or plate heating, than the films that do not have the TiOz precursor layer. This indicates that the reaction proceeds faster and a greater amount of Ag nanoparticles is formed, for the same reaction time. Therefore, the catalytic activity of titanium oxide for the synthesis of Ag nanoparticles was verified.
**Figure 6****.** Shown are some of the different resulting tags obtained with different combinations of Ag salt concentrations, different precursors and/or different polymer matrices (PVA and PEOX). (A) Labels made with (titanium tetraisopropoxide) TTiP as titanium oxide/oxyhydroxide precursor, AgNO₃ with a concentration of 0.05M and PVA as matrix polymer. (B) labels with titanium (IV) butoxide as precursor, AgNO₃ with a concentration of 0.15 M and PVA as matrix polymer. (C) TTiP as precursor, AgNO₃ with a concentration of 0.05 M and PEOX as matrix polymer. (D) TTiP as precursor, AgNOa with a concentration of 0.15 M and PVA as matrix polymer.

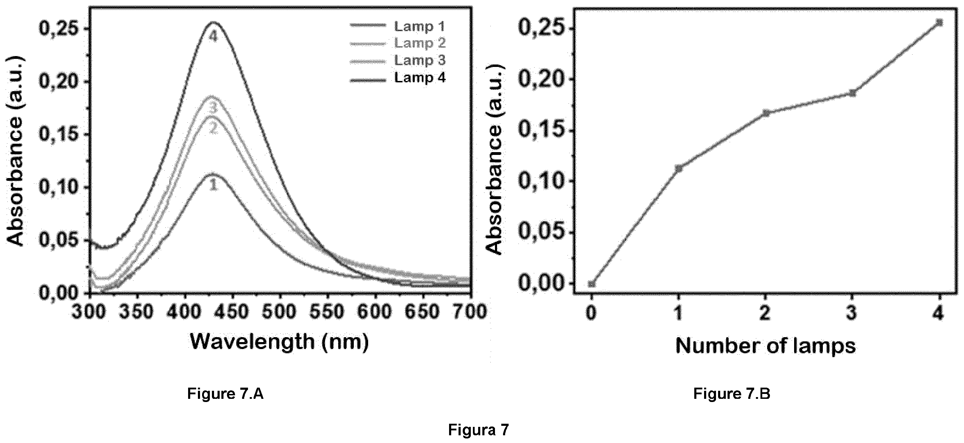

**Figure 7****.** Absorbance of labels made with a different number of lamps. (A) Absorbance vs. wavelength. (B) absorbance as a function of the number of lamps to which it has been exposed. The greater the number of lamps, the greater the absorbance, which indicates that the number of nanoparticles obtained is greater.
**Figure 8.** (A) films with PEOX as matrix polymer with different plate heating times at 180°C. (B) Comparison of a film cured with UV light and a film hot-plated at 180°C, both with TiO₂ catalyst. (C) two films synthesized by UV light, one has used water as a solvent and the other has used 2-methoxyethanol. It is observed that in the presence of the TiO₂ catalyst and with a curing by means of UV radiation a much better result is obtained than by heating at 180°C.

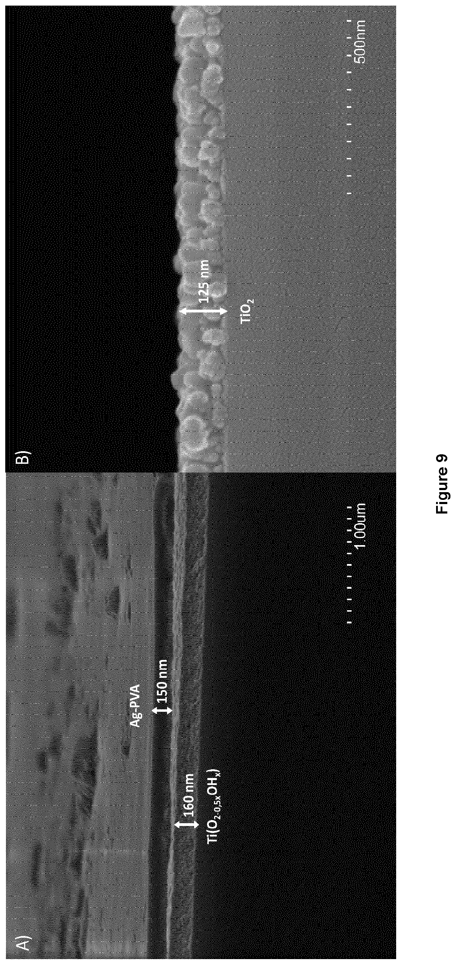

**Figure 9****.** SEM image of the cross section of a) Ag-PVA bilayer system on a layer of TiO₍₂-_{0.5x)} prepared by synthesis *in situ* according to the process of the present invention and b) Layer of TiOz deposited starting from a solution of TiOz nanoparticles synthesized in solution.

These images (corresponding to the material of example 2 of the invention) show the difference between a nanometric coating according to the present invention, which in this case is Ag-PVA on a layer of TiO₍₂-_{0.5x)} synthesized *in-situ* according to the invention against a layer of TiOz deposited from a colloidal solution of TiOz nanoparticles synthesized in solution. It can be seen that although in both cases the TiOz layer has a similar composition, the morphological properties of the films are very different. The crystallinity of the layers is also different. While in figure 9a the TiOz layer is completely amorphous and continuous, in figure 9b the TiOz layer is formed by crystalline grains. These different morphology and crystallinity give rise to different surface properties such as photocatalytic properties for the synthesis of metal nanoparticles from their precursor salts by ultraviolet curing.

### EMBODIMENT EXAMPLES

### Example 1

### Obtaining the TiO₍₂-_{0.5x)}OHₓ nanocatalyst layers

For the preparation of the photocatalyst material, 0.5 ml_ of titanium (IV) isopropoxide are dissolved in 3 mL of 2-methoxyethanol (0.55 M) and 0.3 mL of a 0.05 M solution of triethanolamine in 2-methoxyethanol is added. The resulting solution is deposited by spin coating at 2000 rpm for 60 s on a PET plastic substrate. Once the solution is deposited on the PET plastic substrate, layers of photocatalyst material of about 100 nm are obtained.

### Example 2

### Obtaining the nanocatalyst and coating layers (according to this embodiment a nanocomposite) of Ag PVA.

To prepare the photocatalyst material, the procedure as in example 1 is followed. Next, a solution of 0.05 M AgNOa and 4% w/w PVA in an ethanol/water mixture 1:1, is deposited by spin coating at 2000 rpm for 20 s, over the TiO₍₂-_{0.5x)}OHₓ_nanocatalyst. Once the Ag NO₃ and PVA solution has been deposited, it is exposed to 365 nm UV light emission for 0.1-120 seconds for the synthesis of Ag NPs.

### Example 3

### Obtaining a coating (according to this embodiment, a nanocomposite) of silver nanoparticles embedded in a polymer.

To prepare the photocatalyst material, the procedure as in example 1 is followed. Next, a solution of 0.05 M HAuCl₄ and 4% w/w PVA in an ethanol/water mixture 1:1 is deposited by spin coating, at 2000 rpm, for 20 s, over the TiO₍₂-_{0.5x)}OHₓ_nanocatalyst. Once deposited, the 0.05 M HAu Cl₄ solution is exposed to 365 nm UV light emission, for 0.1-120 seconds, for the synthesis of Au NPs. Au NPs are formed within the matrix shortly after UV exposure.

### Example 4

### Obtaining the TiO₍₂-_{0.5x)}OHₓ nanocatalyst and coating layers (according to this embodiment a nanocomposite) of PVA of Pt.

To prepare the photocatalyst material, the procedure as in example 1 is followed. Next, a solution of 0.05 M H₂PtCl₆ and 4% w/w PVA in an ethanol/water mixture 1:1 is deposited by spin coating, at 2000 rpm, for 20 s, over the TiO₍₂-_{0.5x)}OHₓ_nanocatalyst. Once deposited, it is exposed to 365 nm UV light emission, for 1-60 seconds for the synthesis of Au NPs.

### Example 5

### Obtaining a coating (according to this embodiment, a nanocomposite) of Ag by flexography

To obtain by flexography a nanocomposite of silver nanoparticles embedded in PVA on polyethylene plastic substrates, two inkwells filled with the following inks were placed under two rollers in the following order:
- Inkwell 1: TiO₍₂-_{0.5x)}OHₓ_precursor ink with the following composition: 0.55 M titanium(IV) isopropoxide and 0.005 M triethanolamine in 2-methoxyethanol as solvent
- Inkwell 2: Ag-PVA precursor ink with the following composition: 0.05 M AgNO₃ and 4% w/w PVA in a 1:1 ethanol/water mixture)

Following each of the rollers, there is a UV light lamp that is used for curing the printed inks for a total of 4 lamps.

Following this configuration, the synthesis of Ag nanoparticles embedded in PVA is possible at printing speeds up to 220 m/min. The exposure time to UV light depends on the printing speed. The greater the number of lamps to which the inks are exposed, the more nanoparticles are formed.

### Example 6

### Obtaining nanocomposite of silver nanoparticles embedded in metal oxide.

For the preparation of the catalyst, 0.5 mL of titanium (IV) isopropoxide are dissolved in 3 mL of 2-methoxyethanol, and 0.3 mL of a 0.05 M solution of triethanolamine in methoxyethanol is added. The resulting solution is deposited on a plastic substrate by spin coating, at 2000 rpm for 60 s. Once deposited, layers of about 100 nm of TiO₍₂-_{0.5x)}OH_{x_}nanocatalyst are obtained. Next, a solution of 0.05 M AgNOa and 0.5 M nickel acetate in methoxyethanol is deposited by spin coating, at 2000 rpm for 20 s, over the TiO₍₂-_{0.5x)}OH_{x_}nanocatalyst. Once deposited, it is exposed to 365 nm UV light emission for 0.1-120 seconds for the synthesis of Au NPs.

### Example 7

### Obtaining metallic nanoparticles on nanocatalvst

For the preparation of the catalyst material, the procedure as in example 1 is followed. Once the solution is deposited on the substrate, a 0.05 M solution of AgNOa (HAuCl₄, H₂PtCl₆, Pd(AcO)₂) in ethanol, is deposited by spin coating at 2000 rpm for 20 s, over the TiO₍₂-_{0.5x)}OH_{x_}photocatalyst material. Once deposited, this solution is exposed to UV light emission of 365 nm, for 1-60 seconds for the synthesis of Ag NPs.

### Example 8

### Obtaining the ZnO₍₁-_{0.5x)}OHₓ nanocatalyst layers

For the preparation of the photocatalyst material, 0.5 mL of zinc isopropoxide (II) is dissolved in 3 mL of 2-methoxyethanol (0.6 M), and 0.5 mL of a 0.1 M solution of triethanolamine in 2-methoxyethanol is added. The resulting solution is deposited by spin coating at 2000 rpm for 60 s, over a PET plastic substrate. Once the solution is deposited on the PET plastic substrate, layers of photocatalyst material of about 100 nm are obtained.

### Example 9

### Obtaining the nanocatalyst and nanocomposite layers of PVA from Ag.

For the preparation of the photocatalyst material, the procedure as in example 8 is followed. Next, a solution of 0.05 M AgNOa and 4% w/w PVA, in a mixture 1:1 ethanol/water, is deposited by spin coating at 2000 rpm for 20 s, on the ZnO₍₁-_{0.5x)}OHₓ nanocatalyst. Once the AgNOa and PVA solution is deposited, it is exposed to 365 nm UV light emission, for 1-60 seconds for the synthesis of Ag NPs.

### Example 10

### Obtaining the GeO₍₂-_{0.5x)}OHₓ nanocatalyst layers

For the preparation of the photocatalyst material, 0.46 g of germanium (IV) isopropoxide are dissolved in 3 mL of 2-methoxyethanol (0.5 M) and 0.5 mL of a solution of 0.1 M of triethanolamine in 2-methoxyethanol is added. The resulting solution is deposited by spin coating at 2000 rpm for 60 s on a PET plastic substrate. Once the solution is deposited on the PET plastic substrate, layers of photocatalyst material of about 80 nm are obtained.

### Example 11

### Obtaining the nanocatalyst and Ag PVA nanocomposite layers.

To prepare the photocatalyst material, the procedure as in Example 8 is followed. Next, a 0.05 M AgNOa solution and 4 % w/w of PVA, in a 1:1 ethanol/water mixture, is deposited by spin coating at 2000 rpm for 20 s over the GeO₍₂-_{0.5x)}OH_{x_}nanocatalyst. Once the AgNOa and PVA solution has been deposited, it is exposed to 365 nm UV light emission, for 1-60 seconds for the synthesis of Ag NPs.

## Claims

1. A photocatalytic nanomaterial comprising:
- a solid substrate and
- a metal oxide/oxyhydroxide arranged on the solid substrate forming a continuous coating, with a thickness between 1 nm and 1 micrometer and with an amorphous structure.

2. A photocatalytic material according to claim 1, wherein the photocatalytic metal oxide/oxyhydroxide is selected from oxides/oxyhydroxides of Ti, Zn, Ni, Co, Al, Sb, B, Ce, Si, Ge, Zr, Y, V, Ta, Nb, Nd, W, Zr and combinations thereof.

3. A photocatalytic material according to claim 1, wherein the substrate is selected from paper, cellulose, nanocellulose, wood, silk, wool, cotton, starch, proteins, natural rubber; ceramic materials; plastic; metal, glass; glass- ITO; stone; quartz; silicon; composites and metal oxides.

4. A photocatalytic material according to claim 1, wherein the photocatalyst metal oxide/oxyhydroxide is selected from oxides/oxyhydroxides of Ti, Zn, Ni, Co, Al, Sb, B, Ce, Si, Ge, Zr, Y, V, Ta, Nb, Nd, W, Zr and combinations thereof, and the substrate is selected from paper, cellulose, nanocellulose, wood, silk, wool, cotton, starch, proteins, natural rubber; ceramic materials; plastic; metal, glass; glass- ITO; stone; quartz; silicon; composites and oxides.

5. A photocatalyst material according to claim 1, wherein the oxide/oxyhydroxide comprises titanium (IV) oxide/oxyhydroxide.

6. A photocatalyst material according to any one of the preceding claims in which the metal oxide layer has a thickness between 1 nm and 10 micrometers, preferably between 10 nm and 500 nm, and more preferably between 20 nm and 200 nm.

7. A nanometric coating comprising:
- the photocatalyst material defined above in one of claims 1 to 6, and
- metallic nanoparticles.

8. A nanometric coating according to claim 7, wherein the NPs are selected from Ag, Au, Cu, Co, Pt, Pd, Ir, Ru NPs and a combination thereof.

9. A nanometric coating according to claim 7 or 8, comprising:
- the photocatalyst material defined above in one of claims 1 to 5 and metallic nanoparticles embedded in the photocatalyst material and also on its surface.

10. A nanometric coating according to claim 7 or 8, comprising:
- the photocatalyst material defined above in one of claims 1 to 5, and
- an additional layer that is a matrix, selected from among:
- an organic polymer and
- a metal oxide/oxyhydroxide
arranged on the photocatalyst material, in which the metal nanoparticles are embedded.

11. A nanometric coating according to one of claims 7 to 10, wherein the photocatalyst material comprises titanium (IV) oxide/oxyhydroxide.

12. A nanometric coating according to one of claims 7 to 11, wherein the organic polymer is selected from among: polyvinyl alcohol (PVA), poly(vinyl alcohol-co-ethylene) (EVOH), poly(vinyl butyral-co-vinyl alcohol-co-vinyl alcohol, poly(vinyl butyral-co-vinyl alcohol-co-vinyl acetate), poly(vinyl-co-vinyl acetate-co-vinyl alcohol) chloride, polyvinyl alcohol-polyethylene glycol graft copolymer, polyvinyl acetate (PVAc), polyvinylpyrrolidone (PVP), poly(1-vinylpyrrolidone-co-styrene) , poly(1-vinylpyrrolidone)-graft (1-triacontene), poly(1-vinylpyrrolidone-co-vinyl acetate), polyethylene dioxythiophene/polystyrene sulfonate (PEDOT/PSS), poly(2-ethyl-2-oxazoline) (PEOX), poly(2-methyl-2-oxazoline) (PMOX), poly(2-propyl-2-oxazoline) (PPOX), polydimethylsiloxanes (PDMS), polyurethanes (PU), polystyrene, polyacrylamide (PAM), poly(N-isopropyl-acrylamide) (PNIPAM), poly(N-isopropylacrylamide-co-methacrylic acid), polyethylene glycol (PEG), polyethylene-poly(ethylene glycol) block copolymer, polystyrene-poly(ethylene glycol) block copolymer, poly(methyl vinyl ether), poly(methyl vinyl-co-maleic anhydride), poly(methyl methacrylate) (PMMA), poly(lauryl methacrylate) (PLMA), poly(butyl methacrylate) (PBMA), poly(methyl methacrylate -co- methacrylic acid, poly(methyl methacrylate -co-ethyl acrylate), poly(methyl 20 methacrylate -co-butyl methacrylate), poly(methyl methacrylate -co-ethylene dimethacrylate), poly(α-methylstyrene), poly(benzyl methacrylate), poly(tert-butyl methacrylate), poly(cyclohexyl methacrylate), poly(ethyl methacrylate), poly(hexadecyl methacrylate), poly(hexyl methacrylate), poly(isobutyl methacrylate), poly(tetrahydrofurfuryl methacrylate), poly(tetrahydrofurfuryl methacrylate-co-ethyl methacrylate), poly(acrylonitrile-co-methyl acrylate), poly(N-isopropylacrylamide-co-co-methacrylic acid), polyacrylonitrile, polycarbonate ( PC), poly(styrene-co-acrylonitrile), poly(styrene-co-allyl alcohol), poly(styrene-co-chloromethylstyrene), poly(styrene-co-4-chloromethylstyrene-co-4-methoxymethylstyrene), poly( styrene-co-maleic acid), poly(styrene-co- α - methylstyrene), poly(acenaphthylene), poly(4-bromostyrene), poly(4-chlorostyrene), poly(4-tert-butyl styrene), poly(4-vinylbiphenyl), poly(vinylcyclohexane), poly(4-vinylphenol), poly(vinyltoluene-co- α -methylstyrene), poly(styrene-co-acrylonitrile) (PS-co-AN), 5 poly(styrene-co-allyl alcohol) (PS-co-AA), poly(styrene-co-methyl methacrylate) (PS-co-MMA), polyacrylamide (PAM), poly(4-vinylphenol-co-methyl methacrylate) methyl) (P4VP-co-MMA), polyethyleneimine and poly(vinyl cinnamate).

13. A nanometric coating according to one of claims 7 to 8, or 10 to 12, wherein the metal oxide is selected from among oxides of Li, Na, K, Rb Cs, Mg, Ca, Sr, Ba, Ti, Cr, Mn, Fe, Co, Ni, Cu, Zn, Y, Zr, Nb, Mo, Ru, Pd, Cd, In, Sn, Sb, W, Re, Os, Ir, Pt, Pb, Ce, V, Al, Ga , Si, Ge, Hf, La, Pr, Tb, Se, Ta, Eu and Gd.

14. A nanometric coating according to one of claims 7 to 8, or 10 to 13, wherein
- the photocatalyst material forms a layer with a thickness between 1 nm and 1 micrometer, preferably between 10 nm and 700 nanometers,
- the matrix in which the metal nanoparticles are embedded forms a layer with a thickness between 10 nm and 700 nanometers,

15. A method for the "in situ" preparation of the photocatalyst material defined in any one of claims 1 to 6, comprising the following steps:
I. dissolving a metal oxide/oxyhydroxide precursor in a solvent,
II. coating of the substrate with the liquid medium of step (I) obtaining the photocatalyst material in the form of a wet film.

16. A method according to claim 15, wherein in step I) the solvent is selected from among alcohols, glycol ethers, glycol esters, esters, carbonic esters, amide solvents, N-methylpyrrolidone (NMP), N-vinylpyrrolidone (NVP), sulfoxides, toluene, chlorobenzene, chloroform, dichloromethane, cyclohexanone and gamma butyrolactone.

17. A method according to one of claims 15 to 16, wherein in step I) the metal oxide/oxyhydroxide precursor is a metal alkoxide or an organometallic compound.

18. A method according to one of claims 15 to 17, wherein in step I) the metal oxide/oxyhydroxide precursor is present in a concentration between 0.01 M and 1 M, preferably between 0.05 and 0.75 M, and more preferably, between 0.1 and 0.4 M.

19. A method according to claim 15, wherein step II) related to coating the substrate with the solution of step (I) is carried out by means of a technique selected from among spin-coating, dip-coating, spray coating, flexography, screen printing, gravure, slot-die coating and digital printing.

20. A method according to one of claims 15 to 19 further comprising the following steps:
III) a step III) selected from:
IIIa) solution of a metallic salt and
- an organic polymer
- or a metal oxide/oxyhydroxide precursor
in a second solvent and
IIIb) direct deposition of the metal salt on the film of catalyst material, and
V) UV curing at room temperature between 0.1 and 240 seconds, obtaining metal nanoparticles from the metal salt used in step III).

21. A method according to claim 20, wherein in step III), the second solvent is selected from water, ethanol, methanol, isopropanol, butanol, 2-methoxyethanol, 2-ethoxyethanol, 2-butoxyethanol, 2-phenoxyethanol, 1-methoxy-2-propanol, 1-methoxy-2-propanol acetate, 2-ethoxyethyl acetate, methyl acetate, ethyl acetate, diethylcarbonate, dipropylcarbonate, N,N-dimethylformamide, N,N-dimethylacetamide, N-methylpyrrolidone, N-vinylpyrrolidone, toluene, dimethyl sulfoxide, chlorobenzene, chloroform, dichloromethane, cyclohexanone, and gamma butyrolactone.

22. A method according to claim 20, wherein step V) comprises combining curing with UV radiation with one or more of: thermal curing between 20 and 500 °C, infrared curing and microwave curing.

23. Use of the catalyst material defined in one of claims 1 to 6, as a photocatalyst in the ultrafast synthesis of metal nanoparticles embedded inside organic polymers and metal oxides by exposure to ultraviolet light.

24. Use of the nanometric coating defined in one of claims 7 to 14, in the manufacture of optical sensors, biocidal coatings and reactive oxygen species scavenger, barrier coatings to O₂, H₂O, CO₂ and ultraviolet light, selective UV light absorber coatings and visible to solar-thermal converters.
